# EUROPEAN PATENT SPECIFICATION

(11) **EP 0 331 003 B1**
(45) Date of publication and mention of the grant of the patent: **11.08.1993**
(21) Application number: 89103154.4
(22) Date of filing: 23.02.1989
(51) Int. Cl.: B23Q 39/02, B23B 39/20

(54) **A turret tool post for lathes, machining centers performing turning operations, and the like**
Werkzeugrevolver für Drehmaschinen, Bearbeitungsinseln zum Drehen und ähnliche Vorrichtungen
Tourelle révolver pour un tour, pour des centres de tournage ou des machines semblables

(30) Priority: 04.03.1988 IT 1965888
(43) Date of publication of application: 06.09.1989
(73) Proprietor: DUPLOMATIC S.r.l., I-21052 Busto Arsizio, Varese (IT)
(72) Inventor: Morlacchi, Gianpaolo, I-20015 Parabiago (Milano) (IT)
(74) Representative: Perani, Aurelio

(56) References cited:
- FR-A- 2 173 144
- US-A- 3 203 017

## Description

This invention relates to a turret tool post particularly for lathes, machining centers performing turning operations, and the like, being of a type which comprises a base body, a tool holding table supported for a stepwise rotary movement on the base body, a first motor for driving said table, a plurality of tool holding spindles each of which is mounted rotatably on said table and taken in succession to a working position by stepwise rotation of the table, a second motor carried on the base body, a drive actuated by said second motor at the working position, and mating drive-side and spindle-side coupling means.

As is known, lathes and especially machining centers for performing turning operations, are required to carry out a large number of machining operations on a work piece, including drilling, milling, boring, and the like, i.e. to summarize, a range of operations commonly referred to as rotary tool machining.

Accordingly, the tool holding table is not only to accept turning tool bits but also to mount tool holding spindles which can accomodate respective so-called rotary tools of the kind of drill bits, cutters, borers, etc.

Upon the tool holding table reaching a predetermined angular setting to bring a selected rotary tool to the working station, the drive-side coupling means register with the spindle-side coupling means and can be shifted axially to engage the latter, thereby a driving connection is established. In this way, a motor is enabled to rotatively drive a tool to carry out a desired machining operation. An example of such known turret posts is described in EP-A-0215748.

While being in many ways advantageous and enjoying widespread acceptance, such known turret posts are complex construction-wise as relates to the mechanism employed therein to shift the drive-side coupling means toward the spindle-side coupling means and engage them therewith, on account of the coupling means being specifically dimensioned for transmitting sufficient torque to work on metal materials.

The problem that underlies this invention is to provide a turret tool post as specified above, which has such construction and performance characteristics as to meet the above-noted demand, and the same time can obviate the cited drawbacks with which prior turret posts are beset.

This problem is solved by a turret post as claimed in the appended claim 1.

Further features and the advantages of a turret post according to the invention will be more clearly understood by making reference to the following detailed description of a preferred embodiment thereof, to be taken by way of illustration and not of limitation in conjunction with the acompaining drawings, where:

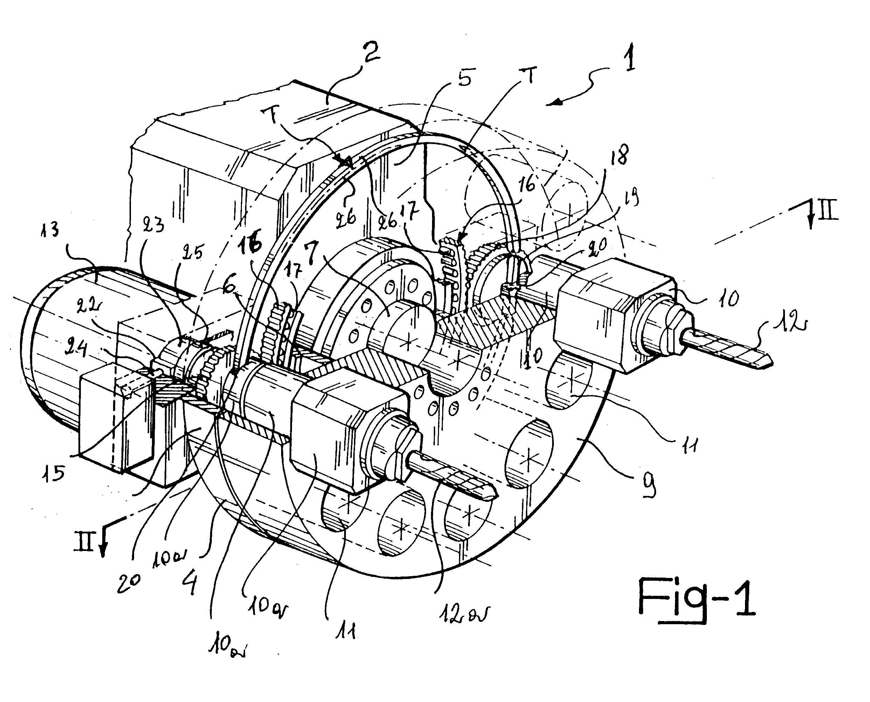

Figure 1 is a part-sectional perspective view of a turret tool post according to the invention;

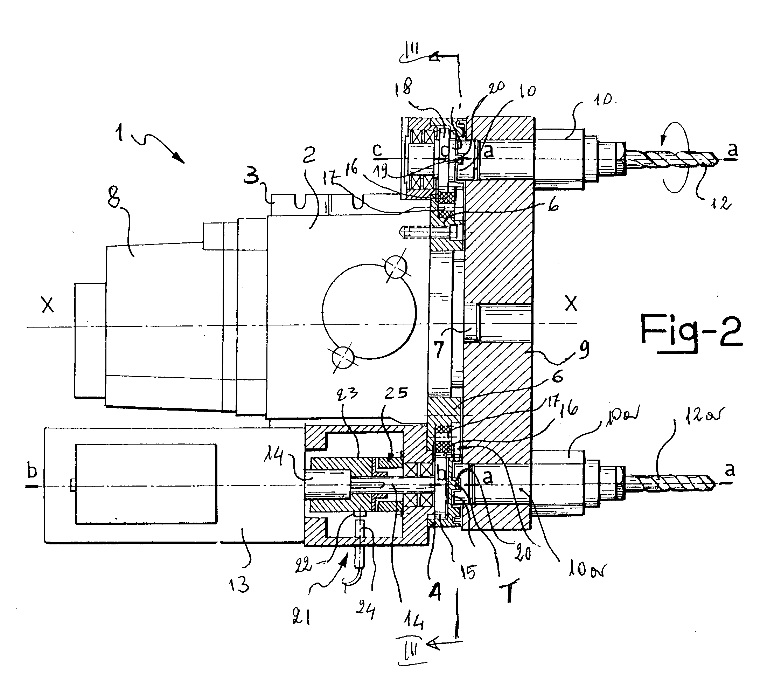

Figure 2 is a sectional view through the turret post of Figure 1, taken along the line II-II of Figure 1;

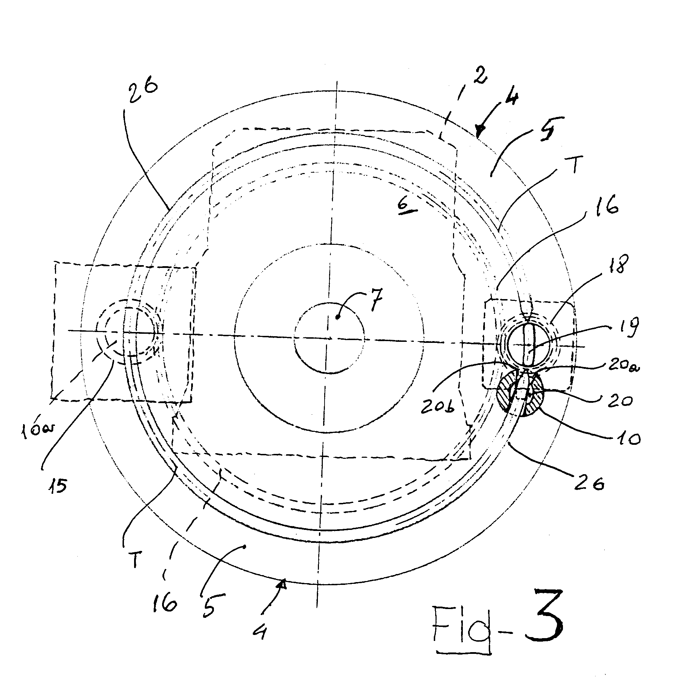

Figure 3 is a sectional view taken along the line III-III of Figure 2;

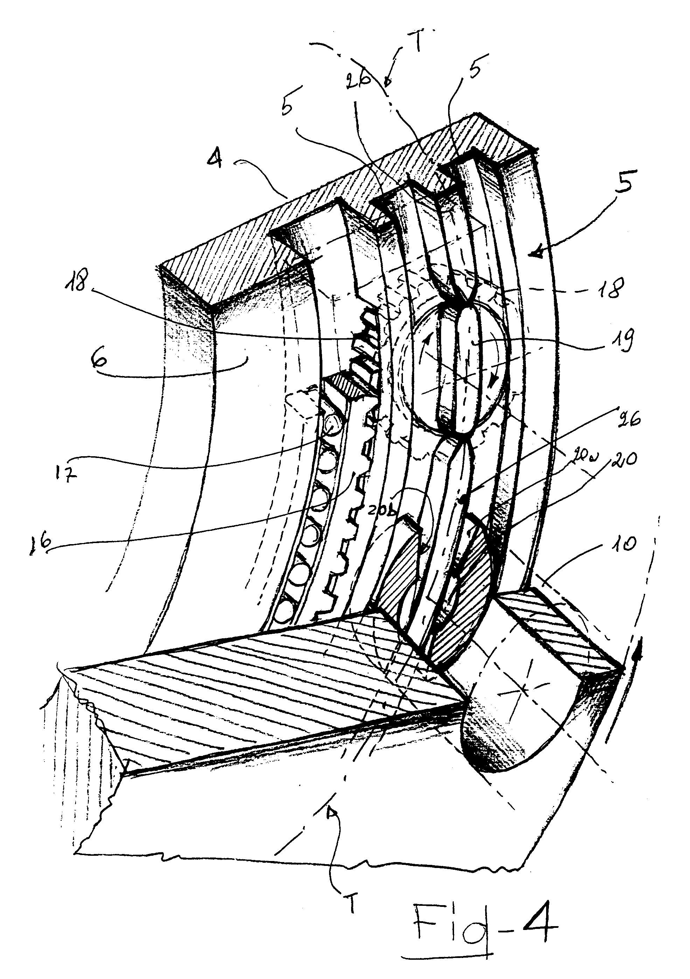

Figure 4 is a part-sectional perspective view in an enlarged scale of the drive-side coupling means at the working position.

The turret post 1 comprises a substantially parallelepipedic base body 2 having an elongate shape along an axis X-X and being provided with feet 3 for attachment to the bed of a lathe, not shown, with the axis X-X lying in the general direction of the lathe main axis or center axis.

The base body 2 is provided on the front with an annular flange 4 which has a face 5 from which a hub 6 juts out.

From the base body 2, there juts out, through the annular flange 4, a shaft 7 having an axis X-X, being journalled on the base body, and provided with motor 8 for driving it rotatively stepwise, in a manner which is quite conventional.

Keyed to the shaft 7, coaxially therewith, is a tool holding table 9 which carries a plurality of tool holding spindles such as 10 and 10a rotatably thereon, with the splindles arranged at pitch distances around its periphery and having respective axis a-a parallel to the axis X-X. Each spindle 10 and 10a is mounted for rotation in a respective support housing 11 provided in the table 9.

The spindle 10 and 10a are adapted to receive respective tools of the rotary types, such as drill bits 12 and 12a.

By rotating the tool holding table 9 stepwise, any desired tool holding spindle according to the working requirements is taken around a circular path T of movement to the working position.

In the drawings, the spindle 10 is shown as being located at the working position. An electric motor 13 is provided to rotatively drive that spindle which, as the spindle 10 in the drawings, is currently positioned at the working station. The motor 13 is laid with its axis b-b parallel to the axis X-X and mounted on the flange 4 at a position which is diametrically opposed to the position where the working station is provided.

The output shaft 14 of the motor 13 is provided with a pinion gear 15 which is in mesh engagement with a ring gear 16, the latter being mounted for rotation around the hub 6 with the interposition of conventional rolling bearing members 17 therebetween. Also meshing with the ring gear 16 is a pinion gear 18 which is journalled on flange 4 for rotation about an axis c-c which will coincide with the axis a-a of a spindle 10 located at the working station.

A tenon 19 protrudes forwardly from the pinion gear 18 and extends diametrically across it to form drive-side coupling means.

Each spindle 10 and 10a carried by the table 9 is provided on the rear with a mortise formation 20 which extends diametrically across it. The mortise formation is shaped to match the tenon 19 and forms spindle-side coupling means.

The turret post 1 comprises a setting means 21 for setting the tenon 19 tangentially to the path of movement T, when the driving motor 13 is stopped. Advantageously, these setting means 21 comprises a nib 22 mounted on a cylindrical collar 23 which is formed on the shaft 14 of the motor 13, and a proximity micro-contact 24. In the operation, when the electric motor 13 is cut-off, the proximity micro-contact 24, activated by the nib 22 will operate a brake 25 to stop the motor at the proper position for allowing the tenon 19 to be tangentially aligned with the path T.

The turret post 1 further comprises a spindle angular stop means for keeping each spindle 10 to an angular standstill relatively to the table 9 and hold the mortise 20 at a tangential setting to the path T.

Said spindle angular stop means are advantageously in form of a guide 26 protruding from the face 5 of the flange 4, lying along the path T, and being rectangular in cross-section.

Said guide 26 extends annularly completely along the path T but the position that is occupied by the tenon 19 when this latter is set tangent to said path.

The cross-sectional shape of the guide 26 matches that of the mortise 20, which becomes then guided for sliding movement along the path T.

To facilitate the mortise 20 enter the engagement with the tenon 19, the open ends of the mortise are provided with inclined counterposed side walls 20a and 20b. The operation of the turret post according to the invention will be described herein below with reference to an initial condition, shown in the drawing, under which the micro-contact 24 is activated by the nib 22, the motor 13 is held stationary and the brake 25 operated; the tenon 19 of gear 18 and the mortise 20 of spindle 10 form a male/female connection and set tangent to the path T; the table 9 has just completed a stepwise rotary movement and brought a spindle 10 to the working position.

To effect the desired machining process, it will be first necessary to deactivate the micro-contact 24, release the brake 25, and control the motor 13 to rotate. The latter will drive, via the pinion gear 15, ring gear 16, and pinion gear 18, and through mutual engagement of the tenon 19 and mortise 20, the spindle 10 and drilling tool 12 rotatively to work. On completion of the machining process -- in this instance a drilling process -- the micro-contact 24 is enabled to stop the motor 13 and operate the brake 25, at such a position as to halt the tenon 19 while set tangent to the path T.

When another machining process is to be carried out using a different tool, the stepwise motor 8 is operated. The table 9 will turn stepwise and the mortise 20 of the spindle 10 move clear of the tenon 19; thus, the mortises on the other spindles, such as 10a, are brought in succession over the tenon 19 to either engage or disengage therefrom.

On that spindle which holds the appropriate tool for the intended machinging operation reaching the working position, the stepwise rotary movement of the table 9 is halted. Thus, the mortise of that spindle will become engaged with the tenon to substantially restore the situation to its initial condition. It should be noted that the mutual engagement of the drive-side coupling means (tenon 19) with the spindle-side coupling means (mortise 20) takes place directly on the table, which has brought the required tool for the desired machining process to the working position, reaching the proper angular setting.

Thereafter, the operation can be resumed in a similar way to the one just described.

A major advantage of the inventive turret post is that its construction is uncommonly compact.

In fact, the spindle-side coupling means on a spindle of the turret post according to the invention is bound to exactly meet the drive-side coupling means on its own natural path of movement and engage it directly.

A further advantage of a turret post according to this invention is that its operation is reliable, shock-free, and noise-free.

As a result of all this, the life expectancy of a turret post according to the invention is likely to be improved, with no downtime for repair and/or maintenance.

Understandably, a turret post as disclosed herein above may be variously altered and modified by a skilled one in the art contingent on specific demands without departing from the true scope of the invention as set forth in the appended claims.

## Claims

1. A turret tool post particularly for lathes, machining centers performing turning operations, and the like, comprising a base body (2), a table (9) supported for a stepwise rotary movement on the base body (2), a first motor (8) for driving said table (9), a plurality of tool holding spindles (10,10a) each of which is mounted rotatably on said table and taken in succession to a working position by stepwise rotation of the table (9), a second motor (13) carried on the base body, a drive (14,15,16,18) actuated by said second motor (13) at the working position, and mating drive-side (19) and spindle-side (20) coupling means, characterized in that said drive-side coupling means (19) locate at a position interfering with the path (T) of movement of the spindle-side coupling means (20), associated with each tool holding spindle and are engaged by said spindle-side coupling means (20) each time that the table (9) completes a stepwise rotational movement and a respective tool holding spindle reaches the working position.

2. A turret tool post according to Claim 1, characterized in that said drive-side and spindle-side coupling means are a tenon (19) protruding from the drive gear (18) and respectively a mortise (20) provided at the counterfaced end of each tool holding spindle (10).

3. A turret tool post according to Claim 2, characterized in that it comprises a setting means for setting the tenon (19) tangent to the path (T) of the movement when said second motor (13) is stopped.

4. A turret tool post according to Claim 3, characterized in that the tenon setting means comprise a nib (22) associated with the output shaft (14) of said second motor (13) and a micro-contact (24) stationary mounted on the frame body of the second motor (13), said micro-contact (24) being activated by the nib (22) to bring the motor (13) to a stop.

5. A turret tool post according to Claims 1 to 4, characterized in that it comprises means for keeping the mortise (20) of each tool holding spindle at a tangential setting to the path (T) of movement.

6. A turret tool post according to Claim 5, characterized in that said means for keeping the mortise (20) at a tangential setting to the path (T) of movement, are in form of a guide (26), wherewith said mortise (20) engages slidingly, carried on the base body (2) through a flange (4), and extending along the full path (T) of movement but the portion that is occupied by the tenon (19) when this latter is set tangent to said path.

7. A turret tool post according to Claims 1 and 2, characterized in that the mortise (20) open ends are provided with inclined counterposed side walls (20a,20b).

## Patentansprüche

1. Werkzeugrevolver, insbesondere für Drehbänke, Drehbearbeitungszentren und ähnliche Vorrichtungen, bestehend aus einem Grundkörper (2),einem an diesem zu einer schrittweise möglichen Drehung gelagerten Tisch (9), einem ersten Motor (8) zum Antrieb des Tisches (9), mehreren Werkzeugaufnahmespindeln (10, 10a), von denen jede drehbar am Tisch angeordnet ist und nacheinander durch die schrittweise Rotation des Tisches (9) in eine Arbeitsposition gebracht wird, einem zweiten Motor (13), der am Grundkörper gehalten ist, einem Antrieb (14, 15, 16, 18), der durch den zweiten Motor (13) in der Arbeitsposition aktivierbar ist, und aus ineinandergreifenden antriebs- und spindelseitigen Kupplungsmitteln (19, 20), dadurch gekennzeichnet, daß die antriebsseitigen Kupplungsmittel (19) in einer Lage angeordnet sind, die im Bewegungspfad (T) der jeder Werkzeugaufnahmespindel zugeordneten spindelseitigen Kupplungsmittel (20) liegt, und jedesmal mit den spindelseitigen Kupplungsmitteln (20) in Eingriff kommen, wenn der Tisch (9) seine schrittweise Drehbewegung beendet hat und die entsprechende Werkzeugaufnahmespindel die Arbeitsposition erreicht.

2. Werkzeugrevolver nach Anspruch 1, dadurch gekennzeichnet, daß die antriebsseitigen und spindelseitigen Kupplungsmittel aus einem Zapfen (19) bestehen, der von einem Getrieberad (18) absteht, bzw. aus einer Nut (20), die am entgegengesetzten Ende jeder Werkzeugaufnahmespindel (10) vorgesehen ist.

3. Werkzeugrevolver nach Anspruch 2, dadurch gekennzeichnet, daß Einstellmittel vorgesehen sind, um den Zapfen (19) tangential zu dem Bewegungspfad (T) auszurichten, wenn der zweite Motor (13) steht.

4. Werkzeugrevolver nach Anspruch 3, dadurch gekennzeichnet, daß die Einstellmittel für den Zapfen eine Spitze (22) aufweisen, die der Abtriebswelle (14) des zweiten Motors (13) zugeordnet ist sowie einen stationär am Gehäuse des zweiten Motors (13) angeordneten Mikrokontakt (24), der durch die Spitze (22) aktiviert wird, um den Motor (13) zum Stehen zu bringen.

5. Werkzeugrevolver nach den Ansprüchen 1 bis 4, dadurch gekennzeichnet, daß Mittel vorgesehen sind, um die Nut (20) jeder Werkzeugaufnahmespindel in tangentialer Ausrichtung zum Bewegungspfad (T) zu halten.

6. Werkzeugrevolver nach Anspruch 5, dadurch gekennzeichnet, daß die Mittel, mit denen die Nut (20) tangential zum Bewegungspfad (T) ausgerichtet gehalten wird, die Form einer Führung (26) aufweisen, mit der die Nut (20) in Gleitkontakt kommt und daß diese Führung (26) über einen Flansch (4) am Grundkörper (2) gehalten ist und sich über die ganze Länge des Bewegungspfades (T) mit Ausnahme des Teiles erstreckt, der von dem Zapfen (19) eingenommen wird, wenn dieser tangential zu diesem Bewegungspfad ausgerichtet ist.

7. Werkzeugrevolver nach Anspruch 1 und 2, dadurch gekennzeichnet, daß die offenen Enden der Nut (20) mit gegenüberliegenden schrägen Seitenwänden (20a, 20b) versehen ist.

## Revendications

1. Tourelle revolver notamment destinée à des tours, des centres d'usinage exécutant des opérations de tournage et analogue, comprenant un corps (2) de base, une table (9) supportée afin qu'elle tourne par pas sur le corps de base (2), un premier moteur (8) destiné à entraîner la table (9), plusieurs broches porte-outil (10, 10a) montées chacune afin qu'elle puisse tourner sur la table et mises successivement en position de travail par rotation par pas de la table (9), un second moteur (13) porté par le corps de base, une transmission (14, 15, 16, 18) commandée par le second moteur (13) en position de travail, et des dispositifs complémentaires d'accouplement du côté d'entraînement (19) et du côté de la broche (20), caractérisée en ce que le dispositif d'accouplement (19) du côté d'entraînement occupe une position dans laquelle il se trouve sur le trajet (T) de déplacement du dispositif d'accouplement (20) du côté de la broche qui est associé à chaque broche porte-outil, et coopère avec le dispositif d'accouplement (20) du côté de la broche chaque fois que la table (9) effectue un mouvement de rotation par pas et une broche porte-outil respective atteint la position de travail.

2. Tourelle revolver selon la revendication 1, caractérisée en ce que les dispositifs d'accouplement du côté d'entraînement et du côté de la broche sont un tenon (19) dépassant du pignon d'entraînement (18) et une mortaise (20) placée à l'extrémité en regard de chaque broche porte-outil (10).

3. Tourelle revolver selon la revendication 2, caractérisée en ce qu'elle comprend un dispositif de réglage du tenon (19) tangentiellement au trajet (T) de déplacement lorsque le second moteur (13) est arrêté.

4. Tourelle revolver selon la revendication 3, caractérisée en ce que le dispositif de réglage de tenon comporte un téton (22) associé à l'arbre de sortie (14) du second moteur (13) et un microcontact (24) qui est monté à demeure sur le châssis du second moteur (13), le microcontact (24) étant activé par le téton (22) afin qu'il provoque l'arrêt du moteur (13).

5. Tourelle revolver selon les revendications 1 à 4, caractérisée en ce qu'elle comporte un dispositif destiné à maintenir la mortaise (20) de chaque broche porte-outil en position tangentielle par rapport au trajet (T) de déplacement.

6. Tourelle revolver selon la revendication 5, caractérisée en ce que le dispositif destiné à maintenir la mortaise (20) en position tangentielle au trajet (T) de déplacement est sous forme d'un guide (26), le long duquel peut coulisser la mortaise (20), le guide étant porté par le corps de base (2) par l'intermédiaire d'un flasque (4) et étant placé sur la totalité du trajet (T) de déplacement sauf dans la partie qui est occupée par le tenon (19), lorsque celui-ci est placé tangentiellement au trajet.

7. Tourelle revolver selon la revendication 1 ou 2, caractérisée en ce que les extrémités ouvertes (20) ont des parois latérales opposées inclinées (20a, 20b).
